# EUROPEAN PATENT APPLICATION

(11) **EP 4 571 154 A1**
(43) Date of publication of application: **18.06.2025**
(21) Application number: 23217036.5
(22) Date of filing: 15.12.2023
(51) Int. Cl.: F16K 1/42, F16K 3/24, F16K 11/044

(54) **A VALVE WITH A GUIDING LIP**

(71) Applicant: Danfoss A/S, 6430 Nordborg (DK)
(72) Inventor: CLAUSEN, Anders Østergaard, 6430 Nordborg (DK); ZAGAR, Tomaz, 6430 Nordborg (DK)
(74) Representative: Inspicos P/S

(57) **Abstract**

A valve (1) comprising a valve housing (2) with a first port (4) and a second port (5) is disclosed. The valve housing (2) accommodates a valve element (8) being movable between a first end position and a second end position, the first end position defining a fully open fluid connection between the first port (4) and the second port (5), and the second end position defining a fully closed fluid connection between the first port (4) and the second port (5). Intermediate positions of the valve element (8) define a partly open fluid connection between the first port (4) and the second port (5). The valve element (8) is movable along an opening (13) towards the second port (5), and the opening (13) towards the second port (5) is provided with a lip (15) along an edge of the opening (13), the lip (15) abutting the valve element (8) at least in a region near the opening (13).

## Description

### FIELD OF THE INVENTION

The present invention relates to a valve comprising a valve housing accommodating a movable valve element for controlling a fluid flow through the valve. The valve according to the invention provides a very accurate control of the fluid flow through the valve.

### BACKGROUND OF THE INVENTION

Controllable valves normally comprise a movable valve element accommodated in a valve housing in such a manner that movements of the valve element control the fluid flow through the valve. For instance, the position of the movable valve element may determine at least one opening degree of the valve. The movements of the valve element, and thereby the fluid flow through the valve, may be controlled by appropriately controlling an actuator being operably connected to the movable valve element.

The valve element may, e.g., move along at least one opening formed inside the valve, in such a manner that the position of the valve element relative to the opening defines a cross sectional size of the opening being available for fluid flowing therethrough, thus defining an opening degree of the valve with respect to a fluid connection which includes the opening.

Often the relationship between the position of the valve element and the fluid flow through the opening is not linear, or otherwise well defined, and it may therefore be difficult to control the position of the valve element in manner which results in a desired and well defined fluid flow through the valve.

### DESCRIPTION OF THE INVENTION

It is an object of embodiments of the invention to provide a valve which allows for accurate and well defined control of the fluid flow through the valve.

The invention provides a valve comprising a valve housing with a first port and a second port, the valve housing accommodating a valve element being movable between a first end position and a second end position, the first end position defining a fully open fluid connection between the first port and the second port, and the second end position defining a fully closed fluid connection between the first port and the second port, and where intermediate positions of the valve element define a partly open fluid connection between the first port and the second port,
wherein the valve element is movable along an opening towards the second port, and wherein the opening towards the second port is provided with a lip along an edge of the opening, the lip abutting the valve element at least in a region near the opening.

Thus, the valve according to the invention comprises a valve housing with a first port and a second port, the valve thus defining a fluid connection between the first port and the second port. Fluid flowing through the valve may flow in either direction, i.e. from the first port, acting as a fluid inlet, to the second port, acting as a fluid outlet, or from the second port, acting as a fluid inlet, to the first port, acting as a fluid outlet. The direction of the fluid flow through the valve may even be selected, depending on the requirements at a given point in time.

The valve housing accommodates a valve element being movable between a first end position and a second end position. The first end position defines a fully open fluid connection between the first port and the second port, and the second end position defines a fully closed fluid connection between the first port and the second port. Thus, when the valve element is in the second end position, the fluid connection between the first port and the second port is fully closed, and no fluid flows in the fluid connection. If the valve element is moved away from the second end position, the fluid connection between the first port and the second port is gradually opened until the first end position is reached, where the fluid connection is fully open. Accordingly, when the valve element is arranged in intermediate positions between the first end position and the second end position, the fluid connection between the first port and the second port is partly open. Thus, the position of the valve element determines the fluid flow through the fluid connection between the first port and the second port, and thereby through the valve.

The valve element is movable along an opening towards the second port, the opening thus being arranged in or forming part of the fluid connection between the first port and the second port. Accordingly, the position of the valve element relative to the opening defines a cross sectional size of the opening being available for fluid flowing therethrough, thus defining an opening degree of the valve with respect to the fluid connection between the first port and the second port.

The opening towards the second port is provided with a lip along an edge of the opening, and the lip abuts the valve element at least in a region near the opening. Thus, when the valve element moves along the opening, it remains in abutment with the lip along the edge of the opening. This ensures that the cross sectional size and shape of the opening being available for fluid flow, when the valve element is in a given position, is very well defined. Accordingly, a very well defined opening degree is obtained, resulting in very accurate and reliable flow characteristic of the valve. Furthermore, the lip allows for the flow characteristic of the valve to be designed to match certain requirement. For instance, the flow characteristic may be linear, but alternative flow characteristics may also be obtained. Thus, the valve can be controlled in a very accurate and reliable manner. Moreover, the abutment between the valve element and the lip may reduce the risk of internal leaks in the region near the movable valve element.

In the present context the term 'lip' should be interpreted to mean a relatively narrow feature arranged along the edge of the opening. For instance, the lip may be formed as a protrusion on the part of the valve where the opening is formed, and could, e.g., be moulded directly as a portion of that part during manufacture. As an alternative, the lip may be a separate part mounted on the part of the valve where the opening is formed.

Thus, since the abutment between the valve element and the edge of the opening is obtained via a lip provided along the edge of the opening, the accurate control of the valve is obtained with minimal risk of friction between the valve element and adjacent parts of the valve during movement of the valve element, due to the small potential contact area, e.g. in case of deposited impurities, thus reducing sticking or similar which could affect the accuracy of the control of the valve.

The lip may follow a tapered or curved path along the edge of the opening. For instance, the edge may follow a tapered or curved path, and the lip may follow the path of the edge. Such a tapered or curved path ensures that the opening and closing of the fluid connection between the first port and the second port is performed smoothly, thus significantly reducing the risk of undesired flow effects, such as hammering. Furthermore, the tapered or curved path may be designed in a manner which provides a substantially linear relationship between the position of the valve element and a fluid flow through the opening, thus making it easier to accurately control the valve.

The opening towards the second port may have a shape which is narrower in a region near the second end position than in a region near the first end position. According to this embodiment, the cross sectional shape of the opening towards the second port is such that a narrow opening or flow passage is defined when the valve element is in a position near the second end position, i.e. when it is close to the fully closed position. On the other hand, when the valve element is close to the first end position, i.e. when it is close to the fully open position, a wider opening or flow passage is defined. This ensures that, when the valve element is moved away from the second end position, thus opening the passage through the opening, this results in a gradual and smooth opening of the passage. Similarly, when the valve element is moved towards the second end position, thus closing the passage through the opening, this also takes place in a gradual and smooth manner.

For instance, the opening may have a substantially triangular shape, or a triangular-like shape with one or more of the edges of the triangle being curved. Alternatively, the opening may have a stepped shape.

The edge of the opening and/or the lip may follow a smooth curve between the region near the first end position and the region near the second end position. According to this embodiment, it is ensured that there are no abrupt changes in the cross sectional size of the flow passage through the opening as the valve element moves between the first end position and the second end position. This provides well defined flow characteristics, accurate and reliable control of the valve, and significantly reduces the risk of undesired flow effects, such as hammering.

The valve element may be positioned with a distance to a wall part of the valve in regions away from the lip, so as to define an inner space between the valve element and the wall part. According to this embodiment, it is ensured that contact or abutment between the movable valve element and other parts of the valve arranged near the movable valve element only takes place in a narrow region defined by the lip. The inner space defined between the valve element and the wall part thus ensures that the friction between the valve element and other parts of the valve, e.g. due to impurities adhering to surfaces, during movement of the valve element is minimised. Furthermore, the inner space may be configured to allow debris or other impurities contained in the fluid flowing through the valve to pass through the valve, thus preventing such debris or impurities from adhering to surfaces of the valve. This prevents such debris or impurities from reaching parts of the valve where they would adversely affect operation of the valve, e.g. movable parts of the valve or sealing elements.

The inner space may further be delimited by the lip. In this case the lip may continue along the wall part away from the opening and form an abutment connection between the movable valve element and the wall part which defines a boundary of the inner space.

The lip may form a guiding surface for impurities toward the inner space between the valve element and the wall part. According to this embodiment, it is efficiently ensured that debris or other impurities present in the fluid flowing through the valve is allowed to pass through the valve, rather than adhering to parts of the valve which could be adversely affected by such debris or impurities, e.g. the movable valve element.

The lip may form part of a separate guiding insert mounted in an interior part of the valve housing. According to this embodiment, the opening and the lip arranged along an edge thereof, are formed in a separate guiding insert, which is subsequently mounted in the interior part of the valve. This is an easy way of providing an opening and a lip with a desired shape and size which provides appropriate and desired flow characteristics of the valve. Furthermore, this allows for applying a guiding insert with a design which matches the requirements of a specific valve to be used in a specific context, while using a standard or generic valve housing. Thereby a variety of customized valves can be provided using standard parts, thus obtaining this without unduly increasing the manufacturing costs.

In the case that the valve is of a kind where an inner space is defined between the movable valve element and a wall part, the wall part may also form part of the guiding insert. In this case the guiding insert forms an interface between the movable valve part and the rest of the valve, against which the valve element moves. For instance, the valve element may move inside the guiding insert, the guiding insert thereby guiding the movements of the movable valve element.

The separate guiding insert may be made from a composite material. The composite material could, e.g., be a polymer based material, e.g. polyphenylene sulfide (PPS), polybutylene terephthalate (PBT), glass filled polymer (GF), acrylonitrile butadine styrene (ABS), polycarbonate (PC), or a combination of two of more of these materials. Such composite materials are known to be durable, low cost and lightweight. Accordingly, forming the separate guiding insert from a composite material results in a valve, where the part of the valve which the movable valve element moves against is durable, dimensionally and mechanically stable when exposed to fluid flowing through the valve at low and high temperatures, and lightweight, and can be manufactured at low costs. Furthermore, it is easy to manufacture the guiding insert with an opening and a lip having a shape and size which matches various requirements of the valve, e.g. with regard to flow characteristics.

Other parts of the valve, e.g. the valve housing and/or the movable valve element, may further be made from a composite material. For instance, the valve element may be made from polyphenylsulfone (PPSU). This would, e.g. allow for a valve element with a complex shape to be provided in an easy and cost effective manner.

As an alternative to providing a separate guiding insert, the opening towards the second port and the lip may be formed directly in a suitable part of the valve housing.

The valve may further comprise a first valve seat, and the valve element may abut against the first valve seat when it is in the second end position. According to this embodiment, when the valve element is in the second end position, thus closing the fluid connection between the first port and the second port, it abuts the first valve seat. The abutment against the first valve seat ensures that the fluid connection is appropriately closed, thus minimising potential internal leaks.

The first valve seat may be a sealing element. According to this embodiment, the abutment between the valve element and the first valve seat when the valve element is in the second end position is a sealing abutment, thus even more efficiently reducing potential internal leaks when the fluid connection between the first port and the second port is fully closed.

The valve may be a three-way valve and the valve housing may further have a third port, and the first end position may define a fully closed fluid connection between the first port and the third port and the second end position may define a fully open fluid connection between the first port and the third port, and intermediate positions of the valve element may define partly open fluid connections between the first port and each of the second port and the third port, and the valve element may further be movable along an opening towards the third port.

According to this embodiment, the valve may establish fluid connections between the first port and each of the second port and the third port. Thus, in the case that the first port forms a fluid inlet of the valve, the second port and the third port each forms a fluid outlet of the valve. In this case, fluid flow received in the valve via the first port may be selectively distributed to the second port and/or the third port. In the case that the first port forms a fluid outlet of the valve, the second port and the third port each forms a fluid inlet of the valve. In this case, fluid received in the valve via the second port and the third port, respectively, may be mixed before being supplied to the first port.

The valve element is, according to this embodiment, movable along the opening towards the second port as well as along the opening towards the third port. Thus, the position of the valve element determines the fluid flow in the fluid connection between the first port and the second port, as well as the fluid flow in the fluid connection between the first port and the third port, essentially in the manner described above.

When the valve element is in the first end position, the fluid connection between the first port and the second port is fully open, while the fluid connection between the first port and the third port is fully closed. On the other hand, when the valve element is in the second end position, the fluid connection between the first port and the third port is fully open, while the fluid connection between the first port and the second port is fully closed. Thus, when the valve element is moved from the first end position towards the second end position, the fluid connection between the first port and the second port is gradually closed, while the fluid connection between the first port and the third port is gradually opened. Similarly, when the valve element is moved from the second end position towards the first end position, the fluid connection between the first port and the second port is gradually opened, while the fluid connection between the first port and the third port is gradually closed.

Three-way valves may, e.g., be used in heat pumps or other applications where it may be desired to mix fluid flows.

The opening towards the third port may further be provided with a lip along an edge of the opening, the lip abutting the valve element at least in a region near the opening towards the third port. According to this embodiment, the opening towards the second port as well as the opening towards the third port is provided with a lip. The remarks set forth above with regard to the lip provided along the edge of the opening towards the second port are equally applicable with regard to the lip provided along the edge of the opening towards the third port.

For instance, the opening towards the third port and the associated lip may be formed in a guiding insert mounted in an interior part of the housing. The opening towards the second port and the opening towards the third port, along with the respective lips, may be formed in the same guiding insert, or they may be formed in two distinct and separate guiding inserts, which may, e.g., be joined to each other. Such two guiding inserts may be identical, e.g. arranged in such a manner that they mirror each other.

The three-way valve may comprise a first valve seat and a second valve seat, and the valve element may abut against the first valve seat when it is in the second end position and against the second valve seat when it is in the first end position. This provides appropriate closing of the fluid connection between the first port and the second port, as well as of the fluid connection between the first port and the second port, thus minimising internal leaks. The remarks set forth above regarding the first valve seat are equally applicable here.

The valve may further comprise a sealing part configured to prevent fluid flow between the second port and the third port. According to this embodiment, internal leaks between the second port and the third port are efficiently prevented. The sealing part may, e.g., be arranged in abutment with the movable valve element. In this case the valve element moves against the sealing element during operation of the valve.

As an alternative to a three-way valve, the valve may be two-way valve comprising only a first port and a second port. In this case the movements of the valve element inside the valve housing controls the fluid flow only between the first port and the second port.

### BRIEF DESCRIPTION OF THE DRAWINGS

The invention will now be described in further detail with reference to the accompanying drawings in which
Figs. 1 and 2 illustrate a valve according to an embodiment of the invention,
Fig. 3 is a cross sectional view of the valve of Figs. 1 and 2,
Figs. 4 and 5 are details of the cross sectional view of the valve of Fig. 3 with a movable valve element in a first end position and a second end position,
Figs. 6a-10b illustrate movement of a valve element for a valve according to an embodiment of the invention between a first end position and a second end position, and
Figs. 11-13 illustrate a guiding insert for a valve according to an embodiment of the invention.

### DETAILED DESCRIPTION OF THE DRAWINGS

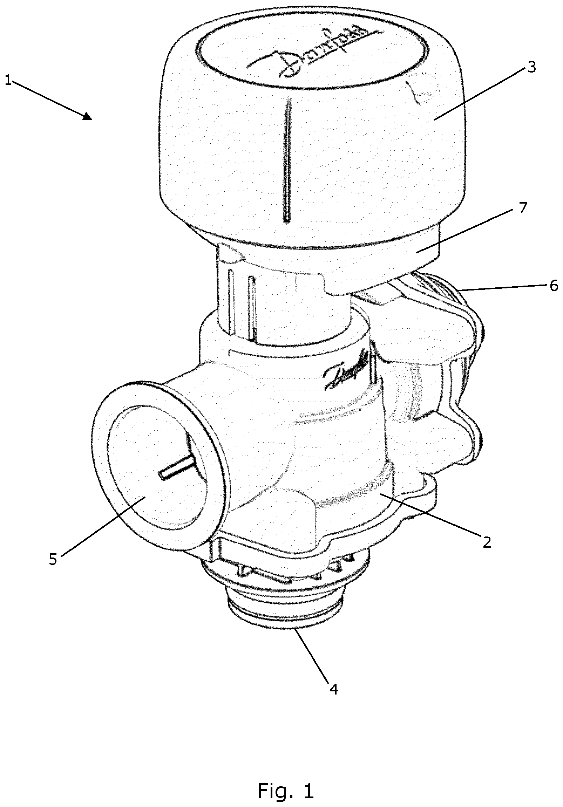

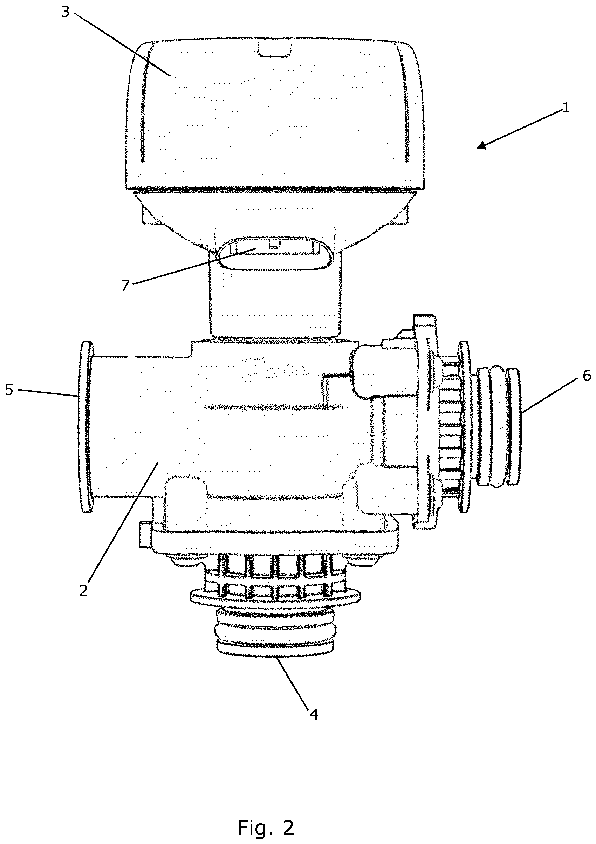

Figs. 1 and 2 illustrate a valve 1 according to an embodiment of the invention. Fig. 1 is a perspective view of the valve 1, and Fig. 2 is a side view of the valve 1.

The valve 1 comprises a valve housing 2 and an actuator housing 3 mounted on the valve housing 2. The valve housing 2 accommodates a movable valve element (not shown) and the actuator housing 3 accommodates an actuator (not shown) being operably connected to the movable valve element. Appropriate operation of the actuator will thus cause movements of the valve element, so as to control a fluid flow through the valve 1.

The valve housing 2 has three ports, in the form of a first port 4, a second port 5 and a third port 6. Fluid connections may be selectively established between the first port 4 and each of the second port 5 and the third port 6. Accordingly, the valve 1 is a three-way valve.

The actuator housing 3 comprises a power connection 7 allowing for power to be supplied to the actuator inside the actuator housing 3, for instance to an electric motor, such as an electric stepper motor, arranged inside the actuator housing 3.

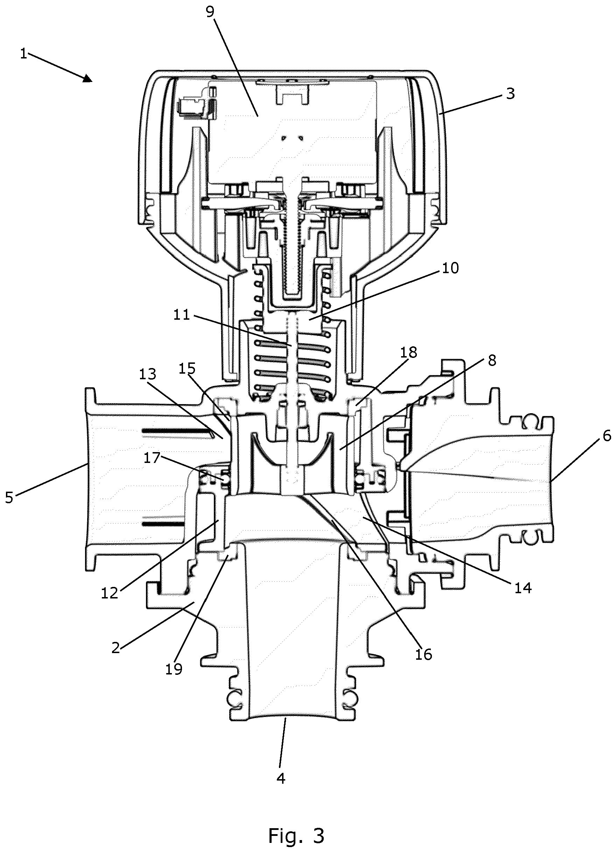

Fig. 3 is a cross sectional view of the valve 1 of Figs. 1 and 2. A valve element 8 is accommodated in the valve housing 2, and is operably connected to an actuator 9 accommodated in the actuator housing 3, via a cup-shaped connecting element 10 and a valve stem 11. Thus, appropriate operation of the actuator 9 causes the valve element 8 to move inside the valve housing 2 towards or away from the actuator housing 3.

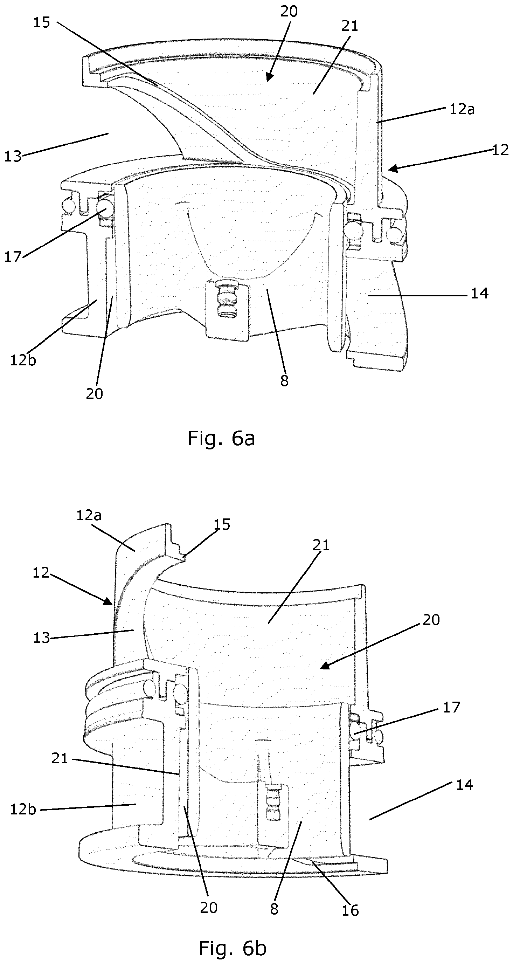

The valve element 8 is arranged within a guiding insert 12 in which an opening 13 towards the second port 5 and an opening 14 towards the third port 6 are formed. Thus, the valve element 8 moves along the opening 13 towards the second port 5 as well as along the opening 14 towards the third port 6. Accordingly, the position of the valve element 8 determines the cross sectional size of opening 13 as well as the cross sectional size of opening 14 being available for fluid flow through the respective openings 13, 14, and thereby whether or not and to which extent the fluid connection between the first port 4 and the second port 5 as well as the fluid connection between the first port 4 and the third port 6 is open. The movement of the valve element 8 will be described in further detail below with reference to Figs. 6a-10b.

The guiding insert 12 comprises a lip 15 arranged along an edge of the opening 13 towards the second port 5, and a lip 16 arranged along an edge of the opening 14 towards the third port 6. The lips 15, 16 abut the valve element 8, thus ensuring that the cross sectional size and shape of fluid passages through each of the openings 13, 14, at a given position of the valve element 8, are well defined. Thereby accurate and reliable control of the fluid flow through the valve 1 is obtained, and the risk of internal leaks may be reduced. Furthermore, this is obtained with minimal friction between the movable valve element 8 and other parts of the valve 1, notably the guiding insert 12, due to the small potential contact area, since the valve element 8 only abuts the lips 15, 16 and a sealing element 17 which prevents leaking between the second port 5 and the third port 6.

In Fig. 3, the valve element 8 is positioned in a second end position, where it abuts a first valve seat 18. In the second end position, the fluid connection between the first port 4 and the second port 5 is fully closed, and the fluid connection between the first port 4 and the third port 6 is fully open. The valve 1 further comprises a second valve seat 19, which the valve element 8 abuts when it is in a first end position, where the fluid connection between the first port 4 and the second port 5 is fully open and the fluid connection between the first port 4 and the third port 6 is fully closed.

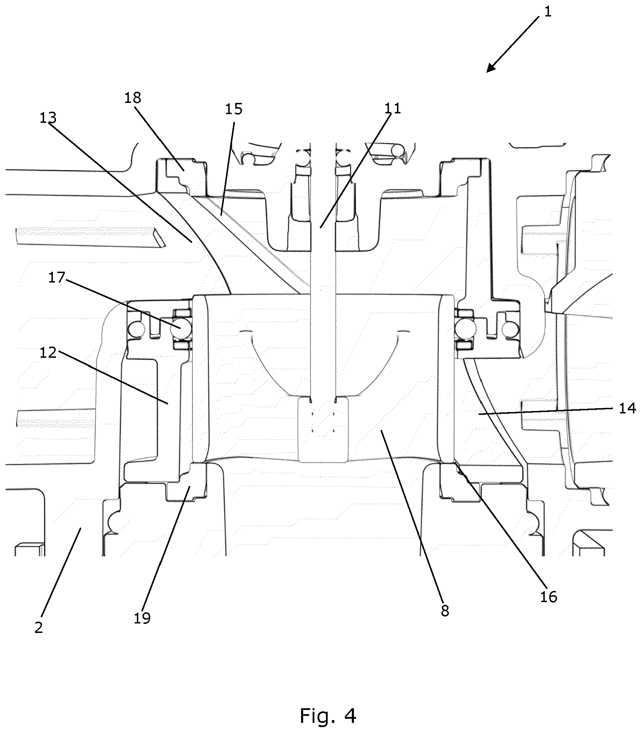

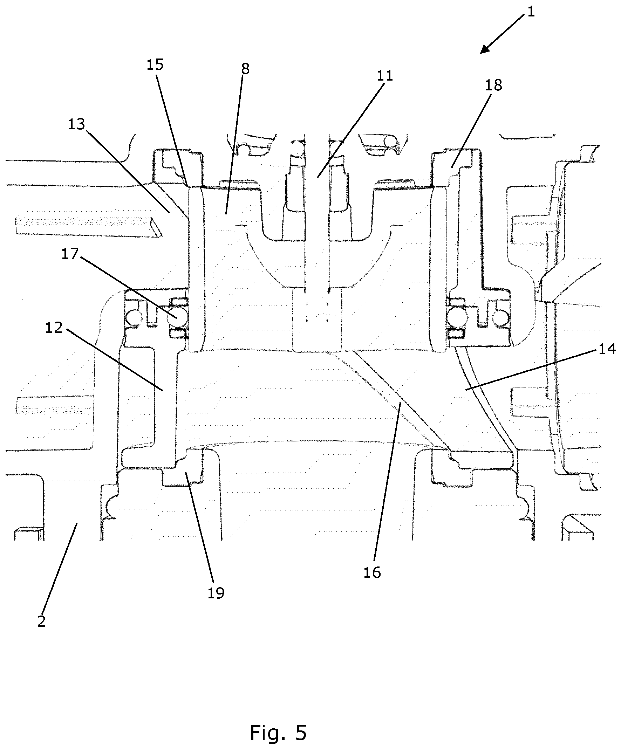

Figs. 4 and 5 are details of the cross sectional view of the valve 1 illustrated in Fig. 3. In Fig. 4 the valve element 8 is positioned in the first end position, abutting the second valve seat 19. In Fig. 5 the valve element 8 is positioned in the second end position, abutting the first valve seat 18, i.e. the position which is also illustrated in Fig. 3.

Figs. 6a-10b illustrate movement of a valve element 8 of a valve according to an embodiment of the invention. More particularly, Figs. 6a-10b show perspective cross sections of a guiding insert 12 and a movable valve element 8 arranged within the guiding insert 12 at five different positions between a first end position and a second end position. The guiding insert 12 and the valve element 8 illustrated in Figs. 6a-10b are of the kind illustrated in Figs. 3-5. For each position of the valve element 8, the guiding insert 12 and the valve element 8 are shown from two different angles in Figures denoted 'a' and 'b', respectively.

It can be seen that the guiding insert 12 comprises a first guiding insert part 12a in which the opening 13 towards the second port and the associated lip 15 is formed, and a second guiding insert part 12b, in which the opening 14 towards the third port and the associated lip 16 are formed.

It can further be seen that an inner space 20 is defined between the valve element 8 and a wall part 21 of the guiding insert 12. This allows debris or other impurities which may be present in fluid flowing through the valve to pass through the valve 1, via the inner space 20, thus preventing that such impurities reach the valve element 8, or other parts of the valve which may be adversely affected by such impurities adhering thereto. Furthermore, the lips 15, 16 are shaped in such a manner that they guide impurities into the inner space 20, thus enabling the passage of the impurities through the valve 1.

In Figs. 6a and 6b the valve element 8 is positioned in the first end position. Accordingly, the opening 13 towards the second port is fully open, and the opening 14 towards the third port is fully closed.

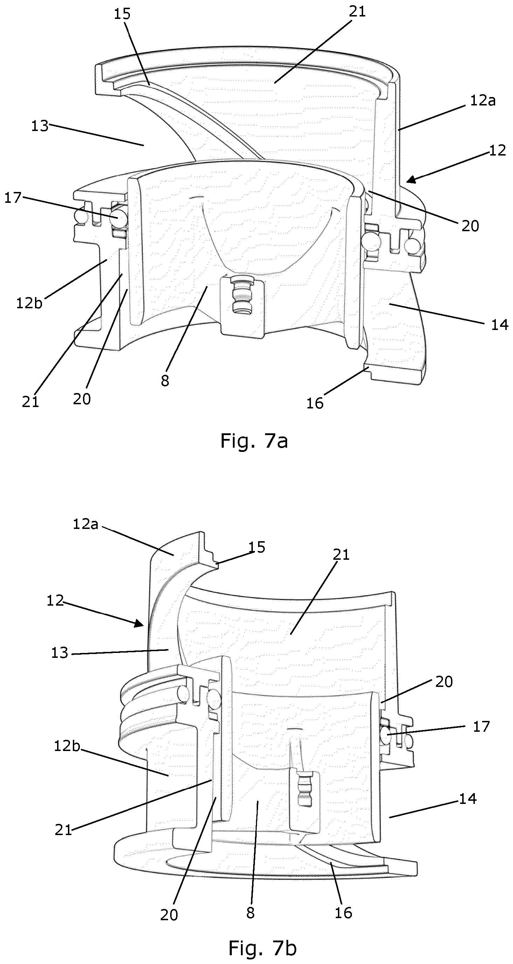

In Figs. 7a and 7b, the valve element 8 has been moved slightly away from the first end position in a direction towards the second end position. Accordingly, the opening 14 towards the third port has been slightly opened, while the size of the opening 13 towards the second port has been slightly decreased.

Since the openings 13, 14 are shaped in such a manner that they are narrower in the region near the respective end positions than in the region where the first guiding insert part 12a and the second guiding insert part 12b are connected to each other, the fluid passage through the opening 14 towards the third port is opened smoothly and gradually, thus preventing undesired flow effects.

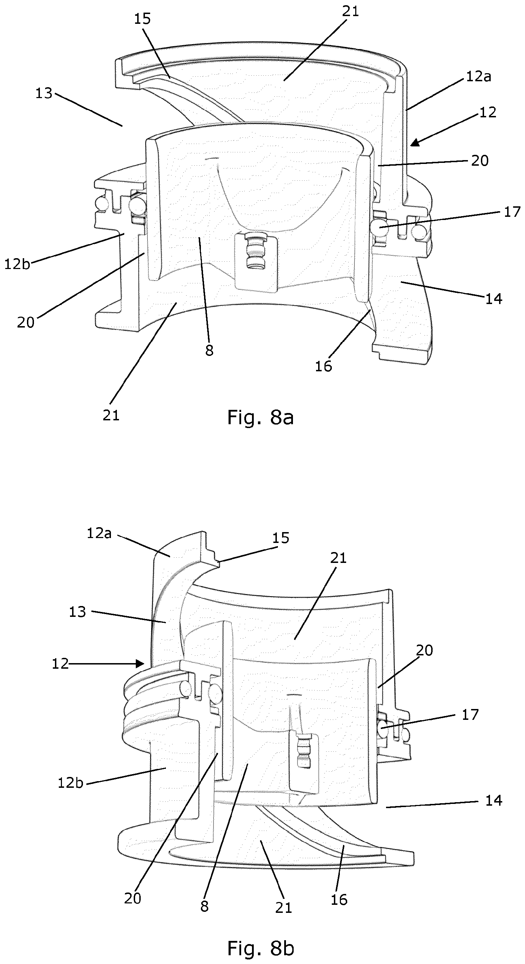

In Figs. 8a and 8b the valve element 8 has been moved further in the direction towards the second end position, and is now positioned substantially half way between the first end position and the second end position. Accordingly, the fluid passage through the opening 13 towards the second port and the fluid passage through the opening 14 towards the third opening are substantially of the same size.

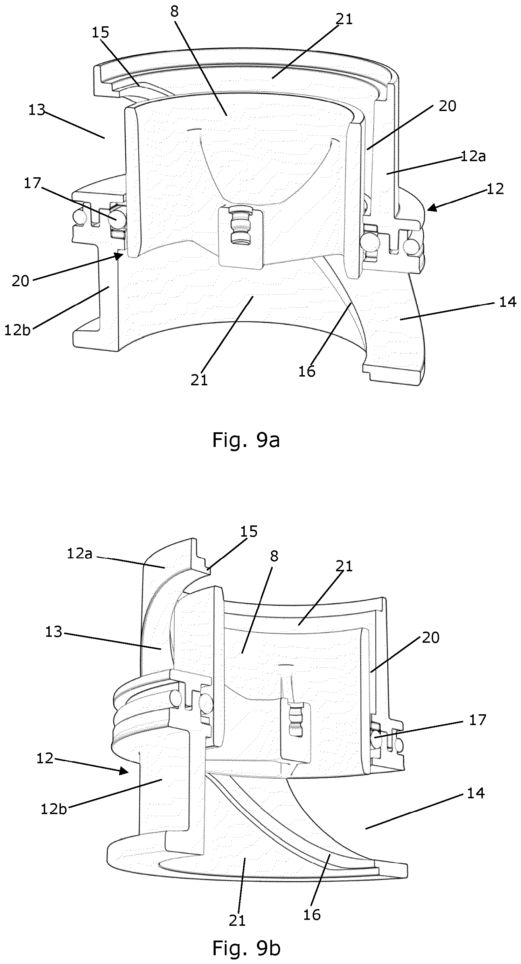

In Figs. 9a and 9b the valve element 8 has been moved even further in the direction towards the second end position, and the fluid passage through the opening 13 towards the second port is in the process of being closed. Due to the shape of the opening 13, this takes place in a smooth and gradual manner, thus preventing undesired flow effects, such as hammering.

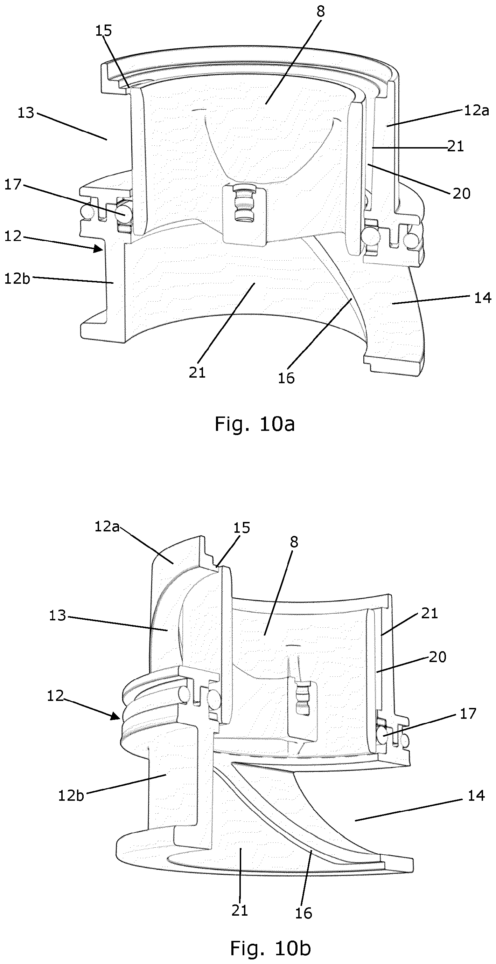

In Figs. 10a and 10b the valve element 8 is positioned in the second end position. Thus, the opening 13 towards the second port is fully closed, while the opening 14 towards the third port is fully open.

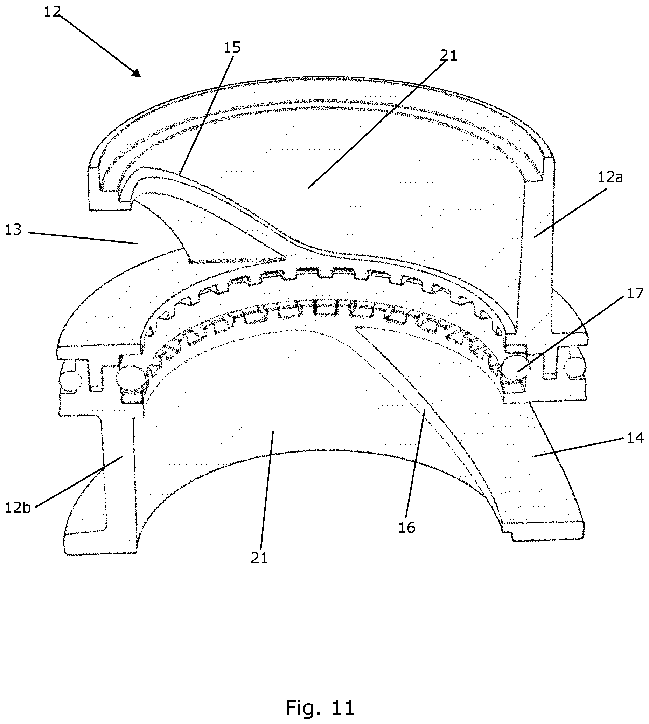

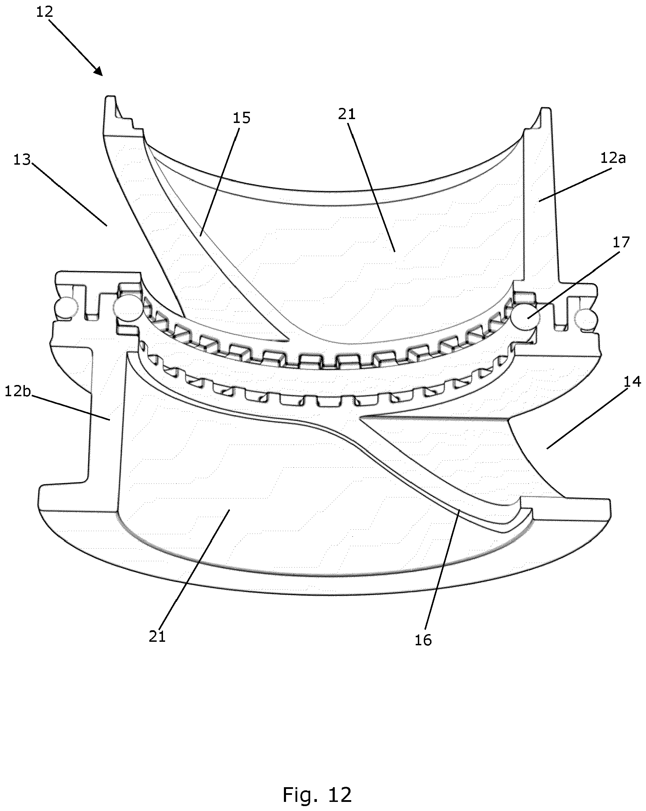

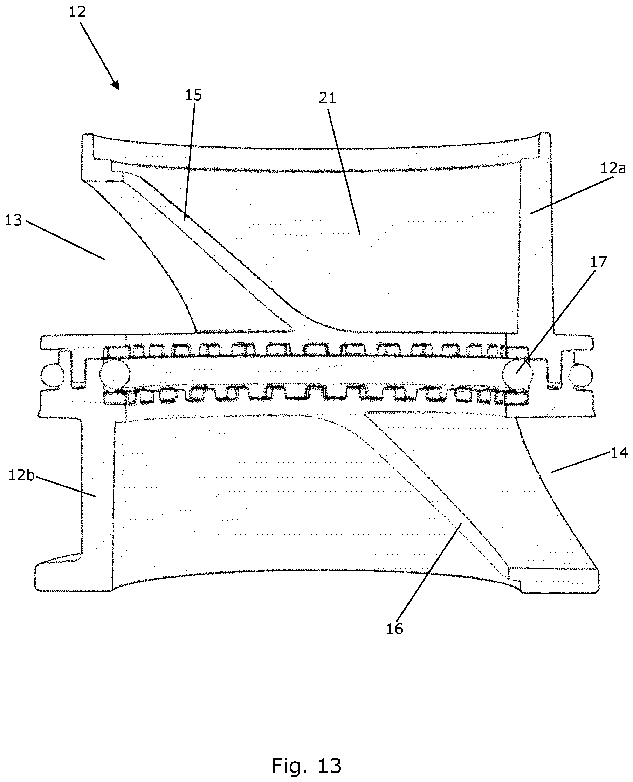

Figs. 11-13 illustrate a guiding insert 12 for a valve according to an embodiment of the invention. Figs. 11 and 12 are perspective cross sectional views of the guiding insert 12 from two different angles, and Fig. 13 is a cross sectional view of the guiding insert 12.

The lips 15, 16 can be clearly seen. It can further be seen that the lips 15, 16, in addition to being arranged along the edges of the respective openings 13, 14, extend along edges of the respective guiding insert parts 12a, 12b where the guiding insert parts 12a, 12b are connected to each other. Thus, the lips 15, 16 separate the fluid connection between the first port and the second port from the fluid connection between the first port and the third port.

## Claims

1. A valve (1) comprising a valve housing (2) with a first port (4) and a second port (5), the valve housing (2) accommodating a valve element (8) being movable between a first end position and a second end position, the first end position defining a fully open fluid connection between the first port (4) and the second port (5), and the second end position defining a fully closed fluid connection between the first port (4) and the second port (5), and where intermediate positions of the valve element (8) define a partly open fluid connection between the first port (4) and the second port (5),
wherein the valve element (8) is movable along an opening (13) towards the second port (5), and wherein the opening (13) towards the second port (5) is provided with a lip (15) along an edge of the opening (13), the lip (15) abutting the valve element (8) at least in a region near the opening (13).

2. A valve (1) according to claim 1, wherein the lip (15) follows a tapered or curved path along the edge of the opening (13).

3. A valve (1) according to claim 1 or 2, wherein the opening (13) towards the second port (5) has a shape which is narrower in a region near the second end position than in a region near the first end position.

4. A valve (1) according to claim 3, wherein the edge of the opening (13) and/or the lip (15) follows a smooth curve between the region near the first end position and the region near the second end position.

5. A valve (1) according to any of the preceding claims, wherein the valve element (8) is positioned with a distance to a wall part (21) of the valve (1) in regions away from the lip (15), so as to define an inner space (20) between the valve element (8) and the wall part (21).

6. A valve (1) according to claim 5, wherein the lip (15) forms a guiding surface for impurities toward the inner space (20) between the valve element (8) and the wall part (21).

7. A valve (1) according to any of the preceding claims, wherein the lip (15) forms part of a separate guiding insert (12) mounted in an interior part of the valve housing (2).

8. A valve (1) according to claim 7, wherein the separate guiding insert (12) is made from a composite material.

9. A valve (1) according to any of the preceding claims, further comprising a first valve seat (18), wherein the valve element (8) abuts against the first valve seat (18) when it is in the second end position.

10. A valve (1) according to claim 9, wherein the first valve seat (18) is a sealing element.

11. A valve (1) according to any of the preceding claims, wherein the valve (1) is a three-way valve and the valve housing (2) further has a third port (6), and wherein the first end position defines a fully closed fluid connection between the first port (4) and the third port (6) and the second end position defines a fully open fluid connection between the first port (4) and the third port (6), and where intermediate positions of the valve element (8) define partly open fluid connections between the first port (4) and each of the second port (5) and the third port (6), and wherein the valve element (8) is further movable along an opening (14) towards the third port (6).

12. A valve (1) according to claim 11, wherein the opening (14) towards the third port (6) is further provided with a lip (16) along an edge of the opening (14), the lip (16) abutting the valve element (8) at least in a region near the opening (14) towards the third port (6).

13. A valve (1) according to claim 11 or 12, further comprising a sealing part (17) configured to prevent fluid flow between the second port (5) and the third port (6).
